Europäisches Patentamt

European Patent Office

Office européen des brevets

(11) Publication number: **0 603 605 A1**

# EUROPEAN PATENT APPLICATION

(21) Application number: **93119494.8**

(22) Date of filing: **03.12.93**

(51) Int. Cl.⁵: **C08J 3/205**

(30) Priority: **15.12.92 US 990684**

(43) Date of publication of application:
**29.06.94 Bulletin 94/26**

(84) Designated Contracting States:
**DE GB**

(71) Applicant: **HULS AMERICA INC.**
**80 Centennial Avenue**
**Piscataway New Jersey 08855(US)**

(72) Inventor: **Feldman, Martin L.**
**9 Fieldcrest Drive**
**East Brunswick, New Jersey 08816(US)**

(74) Representative: **Fleck, Thomas, Dr.**
**Dipl.-Chem. et al**
**Raffay & Fleck, Patentanwälte,**
**Postfach 32 32 17**
**D-20117 Hamburg (DE)**

(54) **A method of coloring a thermoplastic material.**

(57) The invention provides a method for coloring a thermoplastic material by forming a dispersion of a pigment or dye, volatile solvent and optional surfactant, all of which are compatible with a thermoplastic material to be colored. A substantially uniform physical mixture of the dispersion and a thermoplastic material is formed and the mixture is heated at such a temperature to form a melt. The mixture is maintained at a temperature sufficiently high for a time sufficiently long to cause the substantial evaporation of the solvent composition. The invention also provides a colored thermoplastic material formed by this process.

Rank Xerox (UK) Business Services
(3.10/3.09/3.3.4)

Background of the Invention

The present invention relates to a liquid concentrated pigment or dye composition having a volatile carrier. The composition is useful for uniformly coloring thermoplastic materials while they are in the molten state. The volatile carrier is removed during the processing of the thermoplastic materials.

It is well known in the art to color thermoplastic resins. Thermoplastics have been colored in the past by the use of powders or chips containing pigments or coloring materials, master batches of pigment or coloring material plus a binder, and colored liquid dispersions. A problem with all of these prior art coloring materials is that they are not composed purely of colorant, such as pigment particles, but rather pigment particles in combination with other components such as resins, stabilizers, plasticisers, fillers, inert oils, and other additives. These vehicles are left behind in the thermoplastic composition and markedly modify the characteristics of the polymer to be colored. Such materials are considered undesirable impurities with respect to the thermoplastic resin to be colored and tend to adversely affect its physical and chemical properties. The presence of these additives leads to difficulties in operation such as extruder screw slippage, colorant deposit on screws and molds, product warping, and reduced impact resistance. In addition, the prior art coloring processes are disadvantageous because the polymer blend has a tendency to be non-uniformly colored and the amount of energy required to form such a blend is relatively high.

U.S. Patents 3,557,254 and 3,557,255 teach that compositions containing only a pigment, solvent and optional surfactant are known per se for the purpose of mixing with dry, solid, resinous binders and solvents for forming coating compositions such as paints. However, such mixtures are not formed when the binders are in the molten state. U.S. Patent 3,120,423 shows a process for coloring plastics, and uses a solvent and pigment mixture to color thermoplastics. However, this disclosure indicates that the coloring operation is conducted at between room temperature and the boiling point of the solvent and requires that the maximum temperature of the composition during the coloring operation must be lower than the melting point of the polymeric material to be colored. This prior disclosure considers the operating temperature to be critical with regard to the physical change of state of the plastic at the melting point. On the contrary, for the present invention, thermoplastic materials are specifically colored when in the molten state, that is at a temperature above the melting point of the polymeric material. U.S. patent 5,092,907 recognizes the advantage of liquid colorant dispersion over dry powders and master batches for coloring bulk plastic materials while preserving the rheological properties of the polymer, however the colorant dispersion used disadvantageously requires the presence of a terpene oil in addition to a pigment and surfactants. There is no teaching of coloring polymers in the molten state and the terpene oil would be left in the colored thermoplastic material. U.S. patent 4,571,416 describes a liquid colorant concentrate for coloring plastics while in the molten state, however, this concentrate requires the use of a low molecular weight polymer such as a polybutene, and a non-volatile mineral oil. U.S. patent 4,167,503 shows a liquid coloring composition for polymers in the molten state, however, the carrier is such that it remains in the colored plastic product rather than being evaporated. U.S. patent 3,956,008 shows another type of liquid colorant dispersion for plastics, however, the vehicle requires the presence of a chemically inert solid such as carbonate, sulfates and silicates of alkaline earth metals. U.S. patent 4,923,658 shows the formation of colored sheet articles where the coloring is done with dry pigment particles. U.S. patent 4,750,910 shows the preparation of color master batches which include a colorant, solvent and polymer concentrate which is then used to color fibers. U.S. patent 4,444,714 shows a method of coloring resin products with a liquid gel of colorants including a plasticizer and a clay. U.S. patent 3,617,323 shows the difficulty of coloring high melting point thermoplastic compositions with dry coloring materials. This reference attempts a solution by forming a preparation of a pigment, a metal salt of an aliphatic carboxylic acid containing at least six carbon atoms, plus an amide or ester of a lower alkanolamine with a fatty acid containing a lipophilic residue of at least 10 carbon atoms. U.S. patent 3,006,921 shows a colored solution of a solvent and a trifluoromethyl substituted phthalocyanine dyestuff. U.S. patent 1,866,017 shows the use of a process for preparing pigmented lacquers by using a pigment in combination with a soluble cellulose. U.S. patent 4,684,488 shows an apparatus for dosing color powders into an extruder. U.S. patent 4,591,467 shows a method of removing volatiles from particulate plastic feed materials. All of these disclosures, which are incorporated herein by reference, suffer from the various disadvantages mentioned above which are solved by the present invention.

It has now been found that a much improved colored thermoplastic product can be attained by pre-forming a liquid colored dispersion containing a coloring material such as a pigment, plus a volatile solvent and an optional small amount of a surfactant. In the process, the dispersion is blended with the thermoplastic material in the molten state such that the thermoplastic material is substantially uniformly colored. In the formation of the dispersion, a volatile solvent is selected which relatively quickly evaporates at the temperature required to keep the thermoplastic resin in the molten state. Therefore under the processing conditions, the solvent is driven off and the resulting colored thermoplastic resin composition contains only resin plus pigment or dye and an optional small amount of surfactant which does not adversely affect the rheology of the plastic.

When this dispersion is blended with a molten mass of thermoplastic resin, a product is attained which shows a marked improvement in color uniformity due to accurate dispersion metering into the molten mass. As an additional advantage, it is much easier to adjust colors when liquids are used since one does not have to continually check the effect of dry powders. Colors can be pre-blended and more color shades can be added later during processing. It has been found that the ability to change colors mid-process is therefore greatly eased. Furthermore, the amount of energy required to form the uniform blend is noticeably decreased. This is due to the fact that a pre-dispersed composition is being added to the thermoplastic rather than relying on the mixing equipment to disperse the colorant. In this regard, the mixing equipment is only blending the thermoplastic material with the dispersion rather than also forming a dispersion where the equipment has to break down the pigment particles to a smaller size. Also, it is apparent that while energy consumption is reduced due to the colorant being pre-dispersed, screw slippage is not noticed.

As an additional disadvantage to prior art materials, when solid pigment chips are used, they are pre-formed with a fixed vehicle to pigment ratio. In the present invention, only the absolute amount of pigment is important. No other undesired impurities are contributed by the color forming material. The ratio of vehicle to pigment is irrelevant since the vehicle is vaporized by the inventive process leaving only the pigment behind in the colored thermoplastic material. Also, it has been found that when sheet articles are formed from the prior art dry pigment process of preparing colored thermoplastic resins, the pigment particles have a tendency to protrude out from the sheet article surface or produce visual defects such as telescoping. This effect is not noticed in the present invention.

It is therefore an object of the invention to provide a dispersion capable of imparting a color to a thermoplastic material without having any substantial effect on the chemical or physical properties of the thermoplastic. These and other objects of the invention will be in part discussed and in part apparent from a consideration of the detailed description of the preferred embodiment.

Summary of the Invention

The invention provides a method for coloring a thermoplastic material by forming a dispersion of at least one pigment or dye, a volatile solvent composition and an optional surfactant, which pigment or dye, solvent composition and optional surfactant are compatible with a thermoplastic material to be colored, and which solvent composition is capable of substantially evaporating at a temperature below the melting point of the thermoplastic material; and forming a substantially uniform physical mixture of said dispersion and said thermoplastic material; and heating the thermoplastic material at a temperature above its melting point to thereby form a melt of the thermoplastic material; wherein upon the formation of a substantially uniform physical mixture of the dispersion and the thermoplastic material, the mixture is maintained at a temperature sufficiently high for a sufficient time to thereafter cause the substantial evaporation of the solvent composition. The invention also provides a colored thermoplastic material formed by this process.

Detailed Description of the Preferred Embodiment

In the practice of the present invention, a dispersion is prepared which is broadly composed of a pigment or dye, a volatile solvent composition and an optional surfactant. Other ingredients are not preferred and in the most preferred embodiment are specifically excluded. The volatile solvent composition has a boiling point of less than about 500° F, preferably less than 450° F, and most preferably less than 300 oF and a flash point of above about 100° F. In the preferred embodiment, the volatile solvent is water alone since it is non-hazardous, non-explosive, inexpensive, and it does not break down. Water has been found to permit high pigment loadings and good dispersability of pigments. In addition, water is generally present to some extent in making most plastics and so nothing foreign is added to the composition. In the fabrication of many thermoplastics, such as nylons, polyolefins, ABS and polystyrene, a water bath is frequently used to quench the manufacturing reaction. However, within the context of the present invention, it is also contemplated that other solvents may be used such as alcohols, ethers, esters, ketones, hydrocarbons and halocarbons, among others.

The solvent component is preferably present in the dispersion in an amount of from about 15 to about 97 % by weight of the dispersion. A more preferred range is from about 20 % to about 90 % and most preferably from about 25 % to about 85 % by weight of the dispersion.

The composition then contains a pigment or dye component. Coloring matter can be pigments or dyes, however, organic or inorganic pigments are preferred. The pigment or dye may or may not be soluble in the selected solvent. Pigments employed in the practice of the invention may be any of a wide variety of such compounds which are well known, for example, those described at length in the Color Index. Typical pigments non-exclusively include titanium dioxide, iron oxide, chromium oxides, carbon black, phthalocyanines, quinacridones, nickel-barium titanate, Manganese Violet, Cadmium Yellow, Mercad Red, Shepherd Violet #11, and ultramarine blue, among others. It is contemplated that other substitutes for the pigment or dye could be used to form a suitable thermoplastic containing composition, such as acid scavengers, stearates, powdered materials and processing aids. In the preferred embodiment, the pigment or dye has a particle size of less than about 0.5 microns, preferably from about 0.1 to about 0.5 microns and more preferably from about 0.1 to about 0.3 microns.

The pigment or dye component is preferably present in the dispersion in an amount of from about 3 % to about 85 %, more preferably from about 10 % to about 80 % and most preferably from about 15 % to about 75 % by weight of the dispersion.

The optional surfactant component can be any surfactant which is compatible with the other dispersion ingredients and the thermoplastic resin to be colored. Suitable surfactants non-exclusively include anionic, nonionic, cationic, amphoteric and zwitterionic surfactants. The surfactants optionally employed in the practice of the invention may be any of a wide variety of such compounds which are well known, for example, those described at length in the text Surface Active Agents, by Schwartz, Perry and Berch, published in 1958 by Interscience Publishers and in McCutcheon's Detergents and Emulsifiers. The most preferred surfactants include Tween 20 available commercially from ICI Americas, Daxad 30 available commercially from W.R. Grace, Strodex PK90 available commercially from Dexter Chemical. A biocide such as Nuosept 95 available commercially from Huels America may also be included.

The surfactant component is preferably present in the dispersion in an amount of from about 0 % to about 10%, more preferably from about 2 % to about 5 % and most preferably from about 2 % to about 4 % by weight of the dispersion.

Virtually any thermoplastic polymer can be colored by the process of the present invention as long as it is non-reactive with, nor hydrolyzed by the selected solvent. Such polymers non-exclusively include acrylonitrile-butadiene-styrene resins, polystyrene and its copolymers, polyester, polypropylene, polycarbonate, polymethacrylate, polyurethane, fluorinated polymers, polyamides, polyolefins, acrylonitrile polymers and copolymers, vinyl polymers and copolymers, vinylidene polymers and copolymers, polyvinylacetate and its copolymers, polyethylene and cellulosic materials, among others.

In the method of the invention, the thermoplastic material and the colored dispersion are blended in the desired quantities and heated to a temperature above the melting point of the thermoplastic. Usually the liquid dispersion is first added to the dry powder polymer. The heating and blending can be done in either order, however, in the preferred embodiment, these processes are conducted simultaneously. The mixing may be conducted in any suitable equipment including a Banbury mixer, single or twin screw extruder, ribbon blender, injection molding machine, two roll mill or the like. The heating causes the solvent to evaporate, leaving a substantially uniform blend of the thermoplastic material and the solid parts of the dispersion composition. In the preferred embodiment, heating and blending are done in an extruder with a vented barrel such that the solvent is removed under vacuum.

In the preferred embodiment, the number of parts by weight of dispersion blended per hundred parts of thermoplastic material ranges from about 1 to about 20, or more preferably from about 2 to about 12, and most preferably from about 3 to about 8.

In the preferred embodiment, the mixing step is conducted for from about 0.1 minutes to about 10 minutes, or more preferably from about 0.3 minutes to about 5 minutes, and most preferably from about 0.5 minutes to about 2 minutes.

In the preferred embodiment, the heating is conducted at a temperature of from about 100 °F to about 650 °F, or more preferably from about 212 °F to about 600 °F, and most preferably from about 300 °F to about 575 °F.

The following non-limiting examples serve to illustrate the invention.

EP 0 603 605 A1

EXAMPLE 1

A liquid brown colored dispersion is prepared by blending the following components:

|  | PARTS BY WEIGHT |
|---|---|
| Raven 2000 Carbon Black | 1.9 |
| Cadmium Yellow (Harshaw 97-1440) | 20.2 |
| Mercad Red (Ciba-Geigy X-2749) | 22.6 |
| Titanium dioxide (Kerr-McGee CR-834) | 29.0 |
| Tween 20 (ICI) | 1.2 |
| Daxad 30 (W.R. Grace) | 3.0 |
| Strodex PK90 (Dexter Chemical) | 0.2 |
| Nuosept 95 (biocide from Huels America) | 0.1 |
| Water | 21.8 |
|  | 100.0 |

As a comparison the following dry pigment mixture is prepared (without surfactants):

|  | PARTS BY WEIGHT |
|---|---|
| Raven 2000 Carbon Black | 1.9 |
| Cadmium Yellow | 20.2 |
| Mercad Red | 22.6 |
| Titanium dioxide | 29.0 |

EXAMPLE 2

Samples of ABS resin are introduced into a 57 mm twin screw extruder using two different screw configurations as well as a into a Banbury mixer as a control to form compounded colored thermoplastic compositions. Samples of the liquid dispersion at 4.2 parts per hundred resin (phr) and dry pigment mixture at 3.1 parts per hundred resin from Example 1 are introduced into the equipment together with dry magnesium oxide at 0.15 parts per hundred resin according to the processing parameters of Table I.

TABLE I

| TEST | A | B | C | D | CONTROL |
|---|---|---|---|---|---|
| Screw Type | 1 | 1 | 2 | 2 | - |
| MgO | Dry | Dry | Dry | Dry | Dry |
| Pigment | Dry | Liq. | Dry | Liq. | Dry |
| Melt Temp. | 555ºF | 540ºF | 570ºF | 560ºF | - |
| Screw RPM | 350 | 350 | 350 | 350 | - |
| Torque(lb-ft) | 98 | 101 | 95 | 98 | - |
| Rate Pelletized | 670 | 709 | 600 | 625 | - |
| Net Specific Energy (KWH/Kg) | .183 | .177 | .199 | .195 | - |

The following compounded resin parameters are noticed:

5

EP 0 603 605 A1

TABLE II

| TEST | | A | B | C | D | CONTROL |
|---|---|---|---|---|---|---|
| Izod Impact | | 9.4 | 9.4 | 9.4 | 8.5 | 7.5 |
| Tensile strength | | 5284 | 5750 | 5230 | 5166 | 5378 |
| Elongation | | 51.4 | 48.5 | 65.4 | 60.5 | 49.7 |
| Flex | | 8212 | 8053 | 8139 | 8963 | 9117 |
| Heat Distortion Temp. | | 197.9 | 202.1 | 199.0 | 199.2 | 197.0 |
| Melt Index (A2) | | 1.10 | 1.10 | .98 | 1.15 | 1.04 |
| Mobay 4 Pt 60 psi | | .88 | .92 | 1.09 | .99 | 1.17 |
| Flow | 70 psi | .53 | .56 | .65 | .61 | .67 |
| | 90 psi | .21 | .23 | .25 | .24 | .27 |
| | 100 psi | .14 | .14 | .16 | .15 | .17 |
| Brabender (min) | | 50 + | 45 + | 45 + | 25 | 45 + |
| Stability | | | | | | |
| Strip Test | | 3 | 3 + | 3 | 3 + | - |

These results show the benefits of using liquid pigment dispersions as opposed to dry pigment mixtures. These include a rate improvement using liquid dispersions of 4.2 and 5.8 % at constant screw RPM along with a 15°F reduction in stock temperature. This translates into a 2.0 - 3.9% reduction in net specific energy needed to compound using a liquid dispersion as compared to dry pigment coloration.

EXAMPLE 3

Sheet grade ABS resin is compounded with the liquid brown colored dispersion prepared as in Example 1 together with MgO. Dry ABS resin is introduced into a 53 mm twin-screw extruder operated at a melt temperature of 550 °F, 350 RPM and 100 lb-ft. of torque. A Cole Palmer peristaltic pump is used to dispense the liquid colored dispersion at 3.6 parts per hundred resin (phr) and a gear pump is used to dispense MgO at 0.375 phr. Both components are dispensed into the first barrel zone immediately in front of the feed throat of the extruder. The extruder output is 680 pounds per hour. A superior, compounded ABS material is produced with excellent pigment or dye distribution, and without streaking, settling, specking or color variations and without extrusion surge or slippage is observed. The water is fully volatized.

**Claims**

1. A method for coloring a thermoplastic material which comprises:

a) forming a dispersion consisting essentially of at least one pigment or dye, a volatile solvent composition which comprises about 100% water and an optional surfactant, which pigment or dye, solvent composition and optional surfactant are compatible with a thermoplastic material to be colored, and which solvent composition is capable of substantially evaporating at a temperature below the melting point of the thermoplastic material; and in either order (b) or (c):

b.) forming a substantially uniform physical mixture of said dispersion and said thermoplastic material; and

c.) heating the thermoplastic material at a temperature above its melting point to thereby form a melt of the thermoplastic material;

wherein upon the formation of a substantially uniform physical mixture of the dispersion and the thermoplastic material, the mixture is maintained at a temperature sufficiently high for a sufficient time to thereafter cause the substantial evaporation of the solvent composition.

2. The method of claim 1 wherein the dispersion comprises a pigment.

6

3. The method of claim 1 wherein the pigment or dye has a particle size of less than about 0.5 microns in the dispersion formed.

4. The method of claim 1 wherein the thermoplastic material comprises one or more compounds selected from the group consisting of acrylonitrile-butadiene-styrene resins, polystyrene and its copolymers, polyester, polypropylene, polycarbonate, polymethacrylate, polyurethane, fluorinated polymers, polyamides, polyolefins, acrylonitrile polymers and copolymers, vinyl polymers and copolymers, vinylidene polymers and copolymers, polyvinylacetate and its copolymers, polyethylene and cellulosic materials.

5. The method of claim 1 wherein the dispersion comprises from about 3 % to about 85 % of pigment or dye by weight of the dispersion and from about 15 % to about 97 % by weight of the dispersion of solvent composition and wherein the mixture comprises from about 1 to about 20 parts by weight of dispersion per hundred parts by weight, of the thermoplastic material.

6. The method of claim 1 wherein the dispersion further comprises up to about 10% of one or more surfactants.

7. A colored thermoplastic composition prepared by the method which comprises:
   a.) Forming a dispersion consisting essentially of at least one pigment or dye, a volatile solvent composition which comprises about 100% water and an optional surfactant, which pigment or dye, solvent composition and optional surfactant are compatible with a thermoplastic material to be colored, and which solvent composition is capable of substantially evaporating at a temperature below the melting point of the thermoplastic material; and in either order (b) or (c):
   b.) forming a substantially uniform physical mixture of said dispersion and said thermoplastic material; and
   c.) heating the thermoplastic material at a temperature above its melting point to thereby form a melt of the thermoplastic material;
   wherein upon the formation of a substantially uniform physical mixture of the dispersion and the thermoplastic material, the mixture is maintained at a temperature sufficiently high for a sufficient time to thereafter cause the substantial evaporation of the solvent composition.

8. The colored thermoplastic composition of claim 7 wherein the dispersion comprises a pigment.

9. The colored thermoplastic composition of claim 7 wherein the pigment or dye has a particle size of less than about 0.5 microns in the dispersion formed.

10. The colored thermoplastic composition of claim 7 wherein the thermoplastic material comprises one or more compounds selected from the group consisting of acrylonitrile-butadiene-styrene resins, polystyrene and its copolymers, polyester, polypropylene, polycarbonate, polymethacrylate, polyurethane, fluorinated polymers, polyamides, polyolefins, acrylonitrile polymers and copolymers, vinyl polymers and copolymers, vinylidene polymers and copolymers, polyvinylacetate and its copolymers, polyethylene and cellulosic materials.

11. The colored thermoplastic composition of claim 7 wherein the dispersion comprises from about 3 % to about 85 % of pigment or dye by weight of the dispersion and from about 15 % to about 97 % by weight of the dispersion of solvent composition and wherein the mixture comprises from about 1 to about 20 parts by weight of dispersion per hundred parts by weight of the thermoplastic material.

12. The colored thermoplastic composition of claim 7 wherein the dispersion comprises up to about 10% of one or more surfactants.

13. The colored thermoplastic composition of claim 7 wherein the surfactant is selected from the group consisting of anionic, nonionic, cationic, amphoteric and zwitterionic surfactants.

14. The colored thermoplastic composition of claim 7 which consists essentially of, in admixture:
   a.) a molten thermoplastic polymer material; and
   b.) a pre-dispersed liquid colored dispersion which consists essentially of, in admixture:

i .) at least one pigment or dye in an amount sufficient to substantially uniformly color said liquid colored dispersion; and

ii .) a volatile solvent composition, which comprises about 100% water, in an amount sufficient to form a substantially uniform, liquid colored dispersion; and

iii.) an optional surfactant.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | GB-A-1 049 773 (IMPERIAL CHEMICAL INDUSTRIES) <br> * claims 1-6,10-17 * <br> * page 1, line 74 - page 2, line 2 * <br> * page 2, line 12 - page 2, line 23 * <br> * examples 1-7 * <br> * table 1 * <br> * page 2, line 91 - page 2, line 98 * <br> --- | 1-14 | C08J3/205 |
| X | GB-A-1 306 460 (MONTECATINI EDISON S.P.A.) <br> * claims 1,3,4 * <br> * example 3 * <br> * page 1, paragraph 86 - page 1, line 90 * <br> ----- | 1-14 | |

TECHNICAL FIELDS
SEARCHED      (Int.Cl.5)

C08J

The present search report has been drawn up for all claims

| Place of search | Date of completion of the search | Examiner |
|---|---|---|
| THE HAGUE | 4 March 1994 | Hallemeesch, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................
& : member of the same patent family, corresponding
   document

EPO FORM 1503 03.82 (P04C01)